# EUROPÄISCHE PATENTANMELDUNG

(11) **EP 0 654 386 A1**
(43) Veröffentlichungstag der Anmeldung: **24.05.1995**
(21) Anmeldenummer: 94112686.4
(22) Anmeldetag: 13.08.1994
(51) Int. Cl.: B60T 8/66

(54) **Antiblockierregelsystem**

(30) Priorität: 19.11.1993 DE 4339571
(71) Anmelder: ROBERT BOSCH GMBH, 70442 Stuttgart (DE)
(72) Erfinder: Grossardt, Bernd, Ing., D-74357 Bönnigheim (DE); Sager, Frank, Dipl.-Ing., Farmington Hills, MI 48331 (US)

(57) **Zusammenfassung**

Es wird ein Antiblockierregelsystem beschrieben, das zur Bremsdruckvariation Radschlupfsignale mitverwendet.

Bei der Bildung der für die Schlupfbildung benötigten Referenzgeschwindigkeit werden bei laufendenr Regelung wenigstens eines Regelkanals die Radgeschwindigkeiten ausgeschlossen, deren zugehöriger Kanal nicht regelt. Hierdurch wird bei einem Bremskreisausfall verhindert, daß die Bremswirkung nicht optimal ist.

## Beschreibung

### Stand der Technik

Ein Antiblockierregelsystem mit den Merkmalen des Oberbegriffs des Anspruchs 1 ist aus Bosch Technische Berichte 7 (1980), Heft 2, Seiten 65 bis 92, insbesondere Seiten 79 bis 83, bekannt. Den Verlauf der Fahrzeuggeschwindigkeit, einer Radgeschwindigkeit und der Referenzgeschwindigkeit zeigen z. B. die Bilder 21 bis 23 auf Seiten 80 und 81. Man erkennt, daß vor Einsetzen der Regelung die Radgeschwindigkeit gleich der Fahrzeuggeschwindigkeit und diese gleich der Referenzgeschwindigkeit ist. Ab Einsetzen der Regelung verbleibt die Referenzgeschwindigkeit unterhalb der Fahrzeuggeschwindigkeit.

Gehen nun alle Räder in die Bildung der Referenzgeschwindigkeit ein, wobei jeweils das schnellste oder zweitschnellste Rad die Referenzgeschwindigkeit hochzieht, und es kommt zu einem Ausfall eines Bremskreises, dann ziehen die ungebremsten Räder die Referenzgeschwindigkeit auf die Fahrzeuggeschwindigkeit hoch. Der Regler ist jedoch derart ausgelegt, daß die Referenzgeschwindigkeit im Optimum der Reibwert/Schlupf-Kennlinie liegt. Liegt die Referenzgeschwindigkeit jedoch auf den infolge des Kreisausfalls ungebremsten Rädern, so wird die maximal mögliche Fahrzeugverzögerung nicht erreicht.

### Vorteile der Erfindung

Die erfindungsgemäße Maßnahme bewirkt mit einem minimalen Aufwand, daß die maximal mögliche Verzögerung, die bei einem Kreisausfall noch erreicht werden kann, tatsächlich erreicht wird.

### Figurenbeschreibung

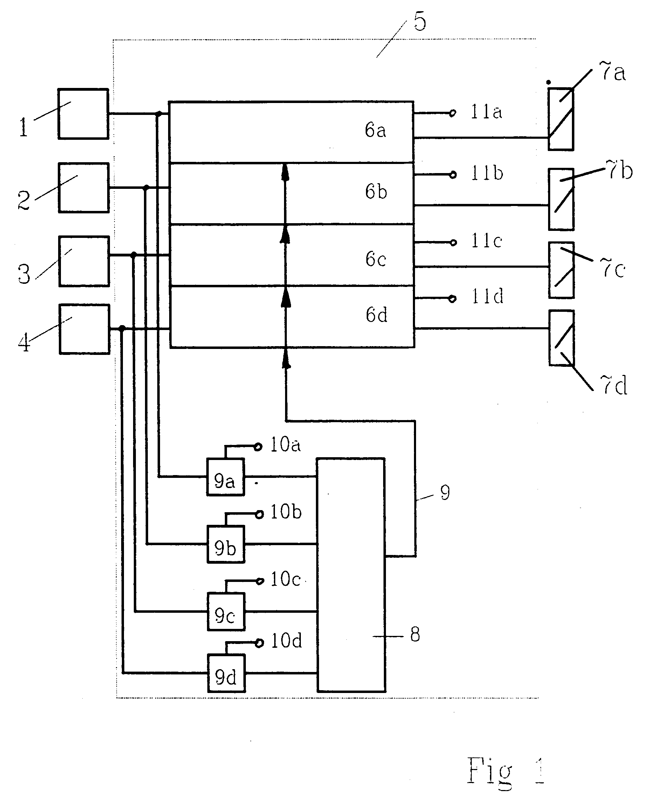

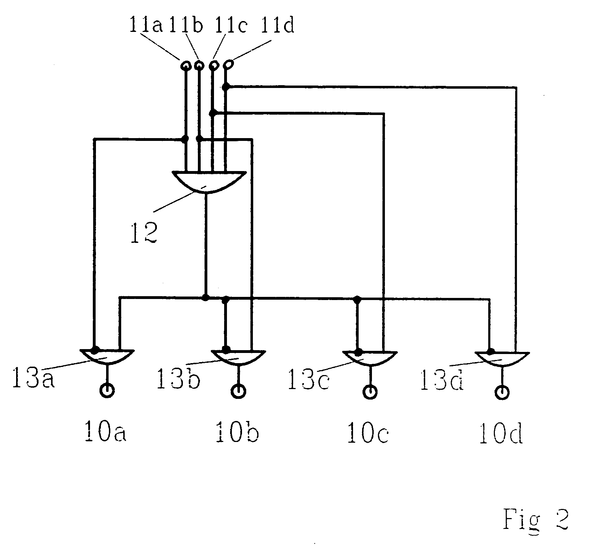

Anhand des Blockschaltbilds der Figur 1 der Zeichnung wird ein Ausführungsbeispiel der Erfindung näher erläutert. Figur 2 zeigt ein in die Figur 1 zu integrierenden Anteil der Anordnung. Was hier als Blockschaltbild dargestellt ist, kann auch als entsprechend programmierter µ 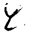 -Prozessor ausgebildet sein.

Mit 1 bis 4 sind die Drehgeschwindigkeitssensoren der Räder des Fahrzeugs bezeichnet. Die von diesen Sensoren abgegebenen Geschwindigkeitssignale werden einer Auswerteschaltung 5 zugeführt, die vier Regelkanäle 6a bis 6d für die einzelnen Räder aufweist. Die in den Regelkanälen 6a bis 6d gebildeten Bremsdrucksteuersignale werden dann den Rädern zugeordneten Bremsdrucksteuerventilen 7a bis 7d zur Bremsdruckvariation zugeführt. In den Bremsdruckregelkanälen 6a bis 6d werden Instabilitätssignale gebildet, die mit Schwellen verglichen werden. Bei Überschreiten einer Schwelle wird eine Bremsdruckabsenkung eingeleitet. In dem Instabilitätssignal können Radschlupfsignale mit Radverzögerungssignalen und damit zusammenhängenden Signalen (z. B. Integral-Radschlupf) und Fahrzeugverzögerungssignale miteinander vermischt werden.

Für die Erfindung wesentlich ist, daß Radschlupfsignale in den Kanälen 6a bis 6d gebildet werden. Hierzu wird eine Referenzgeschwindigkeit benötigt, die in einem Block 8 aus den Radgeschwindigkeitssignalen der Sensoren 1 bis 4 in bekannter Weise gebildet wird.

Die erhaltene Referenzgeschwindigkeit wird über eine Leitung 9 der Kanäle 6a bis 6d zur Schlupfbildung zugeführt.

In die Zuleitungen der Sensoren 1 bis 4 zu den Referenzbildungsblock 8 sind Tore 9a bis 9d eingeschaltet, die normalerweise durchlässig sind. Diese Tore 9 sind mit Ansteuer-Klemmen 10a bis 10d versehen. Andererseits weisen die Kanäle 6a bis 6d Ausgangsklemmen 11a bis 11d auf, an denen ein Signal ansteht, wenn der zugehörige Kanal Regelbetrieb aufweist (AV-Signal).

Zwischen die Klemmen 10a bis 10d und die Klemmen 11a bis 11d ist nun die Schaltung der Figur 2 ein geschaltet. Deren Wirkung soll für die Verschaltung zwischen der Klemme 11a und der Klemme 10a erläutert werden. Für die anderen Klemmen ist die Wirkung analog.

Alle Klemmen 11a bis 11d sind mit einem Oder-Gatter 12 verbunden, das ein Signal abgibt, wenn an wenigstens einer der Klemmen 11a bis 11d Signal anliegt, also wenigstens ein Kanal Regelbetrieb aufweist. Das Ausgangssignal des Oder-Gatters 12 gelangt zu Und-Gattern 13a bis 13d. Die Klemmen 11a bis 11d sind mit je einem der Und-Gatter 13a bis 13d über eine Inversion verbunden. Diese Verschaltung bedeutet, daß wenn einer der Kanäle 6b bis 6d Regelbetrieb aufweist, jeodch nicht der Kanal 6a, das Und-Gatter 13a durchlässig ist und mit seinem Ausgangssignal das Tor 9a undurchlässig macht. Entsprechendes gilt für die anderen Kanäle. Dies bedeutet, daß jeweils die Radgeschwindigkeiten von der Bezugsgrößenbildung, bei Regelung in wenigstens einem Kanal ausgeschlossen sind, deren zugehöriger Kanal nicht regelt. Bei Ausfall eines Bremskreises werden somit die Radgeschwindigkeiten der Räder, die dem Bremskreis zugeordnet sind, von der Referenzbildung ausgeschlossen.

## Patentansprüche

1. Antiblockierregelsystem für ein Kraftfahrzeug enthaltend Sensoren zur Bestimmung der Geschwindigkeit der Räder, einer Auswerteschaltung, der diese Geschwindigkeitssignale zugeführt werden und die daraus Bremsdrucksteuersignale erzeugt und Bremsdrucksteuervorrichtungen, denen die Bremsdrucksteuersignale zur Variation des Bremsdrucks im Sinne einer Vermeidung des Blockierens der Räder zugeführt werden, wobei zur Gewinnung der Bremsdrucksteuersignale Schlupfsignale mitverwendet werden, die mittels eines aus den Radgeschwindigkeitssignalen gebildeten, dem Fahrzeuggeschwindigkeitsverlauf angenäherten Referenzgeschwindigkeitssignal und den Radgeschwindigkeitssignalen gebildet werden, dadurch gekennzeichnet, daß ab Beginn der Regelung an wenigstens einem Fahrzeugrad die Radgeschwindigkeitssignale der nicht geregelten Räder von der Bildung des Referenzgeschwindigkeitssignals ausgeschlossen sind.
